**Europäisches Patentamt**

**European Patent Office**

**Office européen des brevets**

(19)

(11) Veröffentlichungsnummer : **0 313 752 B1**

(12) # EUROPÄISCHE PATENTSCHRIFT

(45) Veröffentlichungstag der Patentschrift :
09.10.91 Patentblatt 91/41

(51) Int. Cl.⁵ : **B60J 1/02, B60H 1/28, B60H 3/06**

(21) Anmeldenummer : **88113676.6**

(22) Anmeldetag : **23.08.88**

(54) **Abdeckleiste für die Unterkante einer eingeklebten Windschutzscheibe eines Kraftwagens.**

(30) Priorität : **30.10.87 DE 3736780**

(43) Veröffentlichungstag der Anmeldung :
**03.05.89 Patentblatt 89/18**

(45) Bekanntmachung des Hinweises auf die
Patenterteilung :
**09.10.91 Patentblatt 91/41**

(84) Benannte Vertragsstaaten :
**ES FR GB IT**

(56) Entgegenhaltungen :
**EP-A- 0 170 110**
**DE-A- 3 606 810**
**FR-A- 2 131 528**

(73) Patentinhaber : **DAIMLER-BENZ**
**AKTIENGESELLSCHAFT**
**Mercedesstrasse 136**
**W-7000 Stuttgart 60 (DE)**

(72) Erfinder : **Roller, Traugott**
**Im Lehen 5**
**W-7277 Wildbert-5-Sulz (DE)**

# Beschreibung

Die Erfindung betrifft eine Abdeckleiste nach dem Oberbegriff des Anspruchs 1.

Eine derartige Abdeckleiste, wie sie in der DE-A-6306810 beschrieben ist, dient dem Zweck, einen Übergang von der Windschutzscheibe zu anschließenden Karosserieteilen zu bilden, als Zierleiste eine Abschlußlinie der Windschutzscheibe optisch herauszustellen und auch die empfindliche Unterkante der Windschutzscheibe gegen einen direkten Aufprall eines Gegenstandes zu schützen.

Dabei wird versucht, die Abdeckleiste oder eine an ihr festgelegte Dichtanordnung derart an der Windschutzscheibe anliegen zu lassen, daß möglichst kein von der Windschutzscheibe abfließendes Wasser in den darunterliegenden Karosserieraum unkontrollierbar eindringt. Dies gelingt zumindest im Fahrbetrieb dadurch, daß die Abdeckleistendichtung gegen die Windschutzscheibe gepreßt wird und in Längsrichtung der Abdeckleiste ein Kanal verläuft, in dem das Wasser zur Seite abgeführt werden soll. Dennoch bildet die Abdeckleiste einen Widerstand für den von der Windschutzscheibe bei Regen abfließenden Wasserstrom, und wirbelt das abfließende Wasser auf.

Liegt nun bei einem Fahrzeug ein durch eine hintere Motorhaubenkante und durch die Windschutzscheibe begrenzter Außenluftansaugbereich eines unter der Motorhaube liegenden Geblases direkt im Bereich dieser Abdeckleiste, so werden die turbulenten Wasserpartikel mit der Ansaugluft gemischt und mit in den Luftfilter gerissen. Dieser hohe Wasserdurchsatz der Luft führt aber zur Zerstörung der innenliegenden Filtermatten und kann sich auch im Fahrzeuginnenraum unangenehm auswirken, wenn diese Luft über das Gebläse dorthin geblasen wird.

Der Erfindung liegt die Aufgabe zugrunde, bei einem Kraftwagen mit einer Abdeckleiste gemäß dem Oberbegriff des Hauptanspruchs, die Ansaugluft des Luftfilters von einem Durchsatz mit einem von der Windschutzscheibe abfließenden Wasserstrom freizuhalten.

Die Aufgabe wird durch die kennzeichnenden Merkmale des Hauptanspruchs gelöst.

Da die Abdeckleiste mit Abstand von der Windschutzscheibenaußenfläche angeordnet ist, wird ein Kanal für den entlang der Windschutzscheibe abfließenden Wasserstrom frei, ohne daß das Wasser durch die Abdeckleiste aufgewirbelt und mit der angesaugten Luft vermischt wird. Das Durchfließen des Kanals wird mit einer Leistenausformung nach Anspruch 2 noch erleichtert. Ebenfalls günstig wirkt es sich aus, wenn die Ansaugöffnung des Luftfilters entfernt hinter dem Einströmbereich des Kanals liegt, so daß der Wasserstrom vor dem Kanal nicht so stark durch den Luftsog beeinflußt wird. Vorteilhaft können an die Abdeckleiste flächige Filterabschnitte angeformt werden, die die Wasserauffangwanne überspannen und von Verunreinigungen aus Luft und Wasser freihalten. Auch in die Öffnung zwischen Motorhaubenkante und Windschutzscheibe können Schmutz und geringe Spritzwassermengen abscheidende Filter eingesetzt werden.

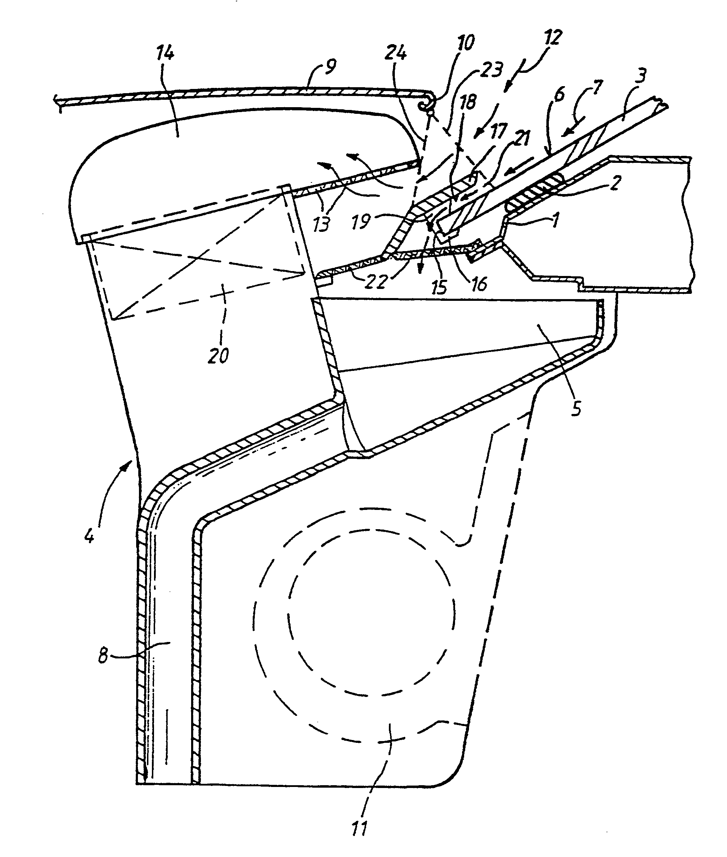

Eine Ausführung der Erfindung ist in der Zeichnung dargestellt.

Die Figur zeigt einen skizzierten Karosserieraum eines Kraftwagens mit einer an der Windschutzscheibe befestigten und im Ansaugbereich des Luftfilters liegenden, erfindungsgemäßen Abdeckleiste.

An eine an einem Fahrzeugaufbau 1 durch eine Klebung 2 festgelegte Windschutzscheibe 3 schließt sich eine in einem Karosserieraum 4 liegende Wasserauffangwanne 5 an, die dazu dient, einen z.B. bei Regen nach unten entlang einer Windschutzscheibenaußenfläche 6 abfließenden Wasserstrom 7 aufzufangen und durch ein Auslaufrohr 8 wieder ins Freie abzuleiten.

Der Karosserieraum 4 ist nach oben durch eine Motorhaube 9 abgedeckt, die mit ihrer Abschlußkante 10 mit Abstand zur Windschutzscheibenaußenfläche 6 liegt, wodurch es möglich ist, mittels eines im Karosserieraum 4 liegenden Gebläses 11 Außenluft 12 durch diese Öffnung in eine Ansaugöffnung 13 eines unter der Motorhaube 9 liegenden Luftfilters 14 zu saugen. Über einer in Fahrzeugquerrichtung verlaufenden Unterkante 15 der Windschutzscheibe 3 verläuft eine an der Windschutzscheibe 3 über in Abständen angeordnete Clipse 16 befestigte Abdeckleiste 17, die das Aussehen dieses Übergangs verbessern und die Unterkante 15 vor Beschädigung schützen soll.

Indem diese Abdeckleiste 17 mit ihrer der Windschutzscheibe 3 zugewandten Oberfläche 18 einen Abstand zur Windschutzscheibenaußenfläche 6 einhält, wird für den Wasserstrom 7 ein Kanal 19 gebildet, durch den es diesem möglich ist, ohne große Turbulenzen in die Wasserauffangwanne 5 abzufließen. Dadurch wird das Wasser nicht mehr aufgewirbelt und mit der angesaugten Außenluft 12 vermischt, und die Zerstörung der im Luftfilter 14 liegenden feuchtigkeitsempfindlichen Filterelemente 20 verhindert.

Um die Abführung des Wasserstroms 7 zu erleichtern, ist der Einströmbereich 21 des Kanals 19 erweitert, indem die Abdeckleiste 17 hier derart angeschrägt ist, daß sie einen größeren Abstand zur Windschutzscheibe 3 aufweist.

An die gegenüberliegende Abschlußkante der Abdeckleiste 17 sind Filterabschnitte 22 angeformt, die die Wasserauffangwanne 5 überspannen und von Grobpartikeln freihalten, die sich aus der Luft absetzen oder mit dem Wasserstrom 7 eingeschwemmt werden.

Natürlich ist es auch möglich, derartige Filterelemente unabhängig von einer Abdeckleiste zu fertigen und über der Wasserauffangwanne 5 anzuordnen.

Auch die Öffnung zwischen der Motorhaube 9 und der Windschutzscheibenaußenfläche 6 ist durch ein Gitter 23 optisch abgedeckt, das Laub, Schnee, Schmutz etc. auffängt, und das an der Motorhaube 9 für deren Öffnung schwenkbar gelagert ist. ebenso wie ein weiteres Auffanggitter 24, das von der Motorhaube 9 bis zur Abdeckleiste 17 reicht und das das dort anprallende Flugwasser ableiten soll.

**Patentansprüche**

1. Abdeckleiste (17) für die Unterkante (15) einer eingeklebten Windschutzscheibe (3) eines Kraftwagens, wobei die Abdeckleiste (17) im Luftansaugbereich eines Gebläses (11) liegt, das Außenluft zwischen der Windschutzscheibenaußenfläche (6) und einer hinteren Motorhaubenkante (10) hindurch in einen unter der Motorhaube (9) liegenden Luftfilter (14) saugt, und die Abdeckleiste (17) im Abflußweg eines entlang der Windschutzscheibenaußenfläche (6) abfließenden Wasserstroms (7) liegt und unter Einhaltung eines Abstands zur Windschutzscheibenaußenfläche (6) angeordnet ist und zur Motorhaube (9) einen für die Luftansaugung ausreichenden Abstand einhält, **dadurch gekennzeichnet,** daß die Abdeckleiste (17) mittels mit Abstand voneinander angeordneter Clipse (16) an der Windschutzscheibe (3) festlegbar ist und mit der Windschutzscheibe (3) einen Durchgangskanal (19) bildet, der den Wasserstrom (7) in eine an die Unterkante (15) der Windschutzscheibe (3) anschließende Wasserauffangwanne (5) einleitet.

2. Abdeckleiste nach Anspruch 1, **dadurch gekennzeichnet,** daß die Abdeckleiste (17) im Einströmbereich (21) des Kanals (19) einen größeren Abstand zur Windschutzscheibe (3) aufweist, als im weiteren Verlauf des Kanals (19).

3. Abdeckleiste nach einem der vorangegangenen Ansprüche, **dadurch gekennzeichnet,** daß die Ansaugöffnung (13) des Luftfilters (14) in Saugrichtung hinter und entfernt von dem Einströmbereich (21) des Kanals (19) liegt.

4. Abdeckleiste nach Anspruch 1, **dadurch gekennzeichnet,** daß an die Abdeckleiste (17) flächige Filterabschnitte (22) angeformt sind, die die absinkenden Grobpartikel aus Luft und Wasser aufhalten.

5. Abdeckleiste nach Anspruch 1, **dadurch gekennzeichnet,** daß entlang einer Abschlußkante (10) der Motorhaube (9) schwenkbare Gitter (23, 24) angelenkt sind, die die Öffnung von dieser bis zur Windschutzscheibenaußenfläche (6) bzw. bis zur Abdeckleiste (17) überdecken.

**Claims**

1. A cover strip (17) for the bottom edge (15) of a glued-in windscreen (3) of a motor vehicle, the cover strip (17) being disposed in the air intake zone of a blower (11) which draws outside air in between the outer surface (6) of the windscreen and a rear edge (10) of the engine bonnet, into an air filter (14) disposed under the bonnet (9), the cover strip (17) being disposed in the discharge path of a stream of water (7) flowing away along the outer surface of the windscreen (6) and being disposed so that it maintains a distance from the outer surface (6) of the windscreen and observes a sufficient gap from the bonnet (9) to provide for air intake, characterised in that the cover strip (17) can be fixed on the windscreen (3) by means of spaced apart clips (16) and form with the windscreen (3) a through passage (19) which introduces the water stream (7) into a water trap (5) adjacent the bottom edge (15) of the windscreen (3).

2. A cover strip according to claim 1, characterised in that the covering strip (17) has in the inflow area (21) of the passage (19) a greater distance from the windscreen (3) than it has during further progress of the passage (19).

3. A cover strip according to one of the preceding claims, characterised in that the intake aperture (13) of the air filter (14) lies, in the intake direction, behind and at a distance from the inflow portion (21) of the passage (19).

4. A cover strip according to claim 1, characterised in that formed on the cover strip (17) are flat filter portions (22) which retain the coarse particles which fall from air and water.

5. A cover strip according to claim 1, characterised in that articulated along a closure edge (10) of the engine bonnet (9) are articulated pivotable grids (23, 24) which mask the opening thereof as far as the outer surface (6) of the windscreen or as far as the cover strip (17).

**Revendications**

1. Baguette couvre-joint (17) pour le bord inférieur (15) d'un pare-brise collé (3) d'un véhicule automobile, la baguette couvre-joint (17) se trouvant dans la région d'aspiration d'air d'une soufflante (11) qui aspire l'air extérieur entre la face extérieure (6) du pare-brise et un bord arrière (10) du capot-moteur pour l'amener dans un filtre à air (14) situé sous le capot-moteur (9), et la baguette couvre-joint (17) se trouvant dans le parcours d'écoulement d'un flux d'eau (7) s'écoulant le long de la face extérieure (6) du pare-brise, en étant disposée à distance de la face extérieure (6) du pare-brise et en respectant vis-à-vis du capot-moteur (9) une distance suffisante pour l'aspiration d'air, **caractérisée** en ce que la baguette couvre-joint (17) peut être fixée sur le pare-brise (3) à l'aide de clips (16) disposés à distance les uns des autres, et elle forme avec le pare-brise (3) un canal de passage (19) qui dirige le flux d'eau (7) dans une cuvette collectrice d'eau (5) se raccordant au bord inférieur (15) du pare-brise (3).

2. Baguette couvre-joint selon la revendication 1, caractérisée en ce que la baguette couvre-joint (17) présente, dans la région d'entrée (21) du canal (19), une plus grande distance du pare-brise (3) que dans la suite du développement du canal (19).

3. Baguette couvre-joint selon l'une des revendications précédentes, caractérisée en ce que l'ouverture d'aspiration (13) du filtre à air (14) se trouve, dans le sens d'aspiration, à la suite et loin de la région d'entrée (21) du canal (19).

4. Baguette couvre-joint selon la revendication 1, caractérisée en ce que des parties filtrantes planes (22) sont formées sur la baguette couvre-joint (17), qui retiennent les particules grossières tombant avec l'air et l'eau.

5. Baguette couvre-joint selon la revendication 1, caractérisée en ce que des grilles pivotantes (23, 24) sont articulées le long d'un bord de terminaison (10) du capot-moteur (9), qui recouvrent l'ouverture de ce dernier, respectivement jusqu'à la face extérieure (6) du pare-brise et jusqu'à la baguette couvre-joint (17).